Europäisches Patentamt

European Patent Office

Office européen des brevets

(19)

(11) EP 0 771 825 A1

(12) DEMANDE DE BREVET EUROPEEN

(43) Date de publication:
07.05.1997 Bulletin 1997/19

(51) Int Cl.$^6$: C08F 220/14

(21) Numéro de dépôt: 96401968.1

(22) Date de dépôt: 13.09.1996

(84) Etats contractants désignés:
DE ES FR GB IT NL

(30) Priorité: 06.11.1995 FR 9513073

(71) Demandeur: ATOHAAS HOLDING C.V.
NL-2034 MB Haarlem (NL)

(72) Inventeurs:
• Renard, Lucien
64000 Pau (FR)

• Delprat, Patrick
64000 Pau (FR)
• Heim, Philippe
64000 Pau (FR)

(74) Mandataire: Luziau, Nelly
ELF ATOCHEM S.A.,
Département Propriété Industrielle,
4-8, Cours Michelet,
La Défense 10 - Cedex 42
92091 Paris-La-Défense (FR)

(54) Compositions pour plaques coulées ignifuges en polmères (méth)acryliques et plaques obtenues à partir de cette composition

(57) L'invention est relative à des compositions pour plaques coulées ignifuges en polymères (méth)acryliques.

La composition comprend au moins un monomère ester (méth)acrylique, de l'acide (méth)acrylique et au moins un composé du phosphore qui est anhydre et est choisi parmi les acides phosphoriques, les esters acide phosphorique ou leurs mélanges, associés ou non à un ester neutre phosphorique éventuellement halogéné. La quantité d'acide (méth)acrylique et de composé du phosphore, en poids par rapport au mélange total constituant la composition, est telle que le coefficient d'ignifugation C.I.: (% d'acide phosphorique) x 0,13 + (% P-ester) x 0,20 + (% OH-ester) x 0,14 + (% acide (méth) acrylique) x 0,025 + 1,17 x % P-ester halogéné x $\frac{\text{Nbre atome halogène}}{\text{M (P-ester halogéné)}}$ est supérieur à 0,95.

**Description**

La présente invention concerne la fabrication de plaques coulées ignifuges en polymères (méth)acryliques.

Le polyméthacrylate de méthyle (PMMA) est une substance connue pour ses propriétés particulièrement intéressantes, pour ce qui est notamment de la transparence, de la résistance aux solvants et au rayonnement U.V. Les plaques coulées en PMMA ne sont, cependant, pas suffisamment ignifugées pour être utilisées dans certains domaines, comme le bâtiment qui demande des matériaux VO au test UL 94 vertical (défini ultérieurement).

L'ignifugation des plaques coulées en polymères (méth)acryliques par l'acide phosphorique est connue depuis longtemps et décrite notamment dans le brevet US-A-3030327. Dans ce brevet, il est, entre autres, envisagé d'ajouter à des monomères (méth)acrylates, comme le méthacrylate de méthyle, éventuellement associés à des monomères oléfiniques copolymérisables avec ces monomères (méth)acrylates, par exemple du styrène, de l'acrylonitrile, de l'acétate de vinyle, du chlorure de vinyle, de l'acide (méth)acrylique ou leurs esters etc, environ 0,5 à 20 % en poids d'acide phosphorique sur la base du poids du mélange. Les propriétés hydrophiles de cette composition peuvent être diminuées par l'addition d'un agent hydrophobe, tel qu'une huile silicone, ou moins hydrophile que l'acide phosphorique comme un ester neutre d'acide phosphorique, comme le phosphate de tris(chloroéthyle). Certaines compositions exemplifiées comprennent du méthacrylate de méthyle, de l'acide méthacrylique comme comonomère, de l'acide orthophosphorique en solution aqueuse à 89 % et, éventuellement, du phosphate de tris(chloroéthyle). Dans certains exemples, l'acide méthacrylique est remplacé par un méthacrylate ou un acrylate d'alkyle, de l'acrylonitrile, du styrène. Dans les compositions des exemples, les comonomères représentent 5 ou 10 % en poids de la composition totale.

Toutefois, malgré la simplicité des formulations, les plaques obtenues à partir de ces compositions présentent un inconvénient en ce que l'on a observé un phénomène de migration de l'acide phosphorique vers la surface, phénomène décelable dès la fabrication par un "toucher gras" (dépôt d'empreinte très marqué), puis, dans le temps, par l'apparition d'un voile léger ou de tâches blanchâtres ayant tendance à s'étendre et évoluant, dans certains cas, vers une opacification complète.

Il est certes tout à fait possible d'incorporer 1 % en poids d'acide phosphorique dans une plaque de polymères (méth)acryliques sans observer de migration, mais, dans ce cas, la plaque n'est pas ignifuge. Pour obtenir une plaque convenablement ignifugée, c'est-à-dire classée VO au test UL 94 vertical, il est nécessaire d'incorporer au minimum 7 % en poids d'acide phosphorique et, dans ce cas, des taches apparaissent au bout d'environ deux semaines.

La société déposante a donc cherché à trouver des compositions à base de monomères (méth)acryliques et de composé du phosphore, permettant de préparer des plaques ignifuges, classées VO au test UL 94 vertical et qui, de plus, ne présentent plus ce problème de migration de l'acide phosphorique.

La Demanderesse a découvert que certaines plaques, d'une composition bien précise, ne présentent aucune altération visuelle après plusieurs mois de vieillissement. Les résultats d'une étude approfondie de ce phénomène mettent en évidence un domaine spécifique dans lequel les formulations conduisent à des plaques coulées en polymères (méth)acryliques parfaitement stables en atmosphère humide à température ambiante.

La présente invention a donc pour objet une composition pour plaques coulées ignifuges en copolymères (méth) acryliques, ladite composition comportant (a) au moins un monomère ester (méth)acrylique et, éventuellement, un monomère à insaturation éthylénique copolymérisable avec le monomère ester (méth)acrylique, (b) de l'acide (méth) acrylique et (c) au moins un composé du phosphore. Cette composition se caractérise par le fait que le composé du phosphore est à l'état anhydre et est choisi parmi les acides phosphoriques et les esters acide phosphoriques ou leurs mélanges, associés ou non à au moins un ester neutre phosphorique éventuellement halogéné et en ce qu'elle comprend, par rapport au poids total des composants (a), (b) et (c), de 65 à 85 % en poids de composé (a) et des proportions en composés (b) et (c) telles que leur rapport (b)/(c) soit supérieur à 0,9 et que le coefficient d'ignifugation CI, égal à :

0,025 x % acide (méth)acrylique

+ 0,13 x % acide phosphorique

+ 0,14 x % OH-ester

+ 0,20 x % P-ester

$$+1{,}17 \text{ x } \%\text{P-ester halogéné x } \frac{\text{Nbre atome halogène}}{M \text{ (P-ester halogéné)}}$$

soit supérieur à 0.95. M (P-ester halogéné)

Par "% d'acide phosphorique", on entend le pourcentage, en poids, d'acide phosphorique ou d'acide polyphosphorique dans la composition (a) + (b) + (c).

Par "% P-ester", on entend le pourcentage, en poids, de phosphore provenant des esters des acides phosphoriques ou polyphosphoriques dans la composition (a) + (b) + (c).

Par "% OH-ester", on entend le pourcentage, en poids, de groupement hydroxyle lié au phosphore provenant des acides phosphoriques ou polyphosphoriques ou des phosphates acide dans la composition (a) + (b) + (c).

Par "% acide (méth)acrylique", on entend le pourcentage, en poids, d'acide acrylique ou méthacrylique dans la composition (a) + (b) + (c).

Par "% P-ester halogéné", on entend le pourcentage, en poids, d'ester neutre phosphorique halogéné. L'expression "M (P-ester halogéné)" est utilisée pour la masse moléculaire de cet ester.

Il est important que le composé du phosphore soit anhydre pour éviter l'incorporation de molécules d'eau au coeur du polymère qui créent un état initial défavorable et augmentent la vitesse d'apparition des défauts.

Le composé (b) peut être l'acide méthacrylique et/ou l'acide acrylique.

Comme composé du phosphore (c), on peut utiliser les acides orthophosphorique, pyrophosphorique, métaphosphorique, polyphosphorique (tripolyphosphorique, tétrapolyphosphorique) ou leurs mélanges, des phosphates acide d'alkyle, éventuellement associés à des triesters d'acide phosphorique halogénés ou non.

Comme phosphates acide d'alkyle, on peut utiliser, dans l'invention, les phosphates mono- ou diacide d'alkyle de 1 à 4 atomes de carbone, ou leurs mélanges.

Un mélange d'acides phosphoriques utiles dans l'invention comprend, par exemple, 49 - 56 % d'acide orthophosphorique ($H_3PO_4$), 39 - 42 % d'acide pyrophosphorique ($H_4P_2O_7$), 5 - 8 % d'acide triphosphorique ($H_5P_3O_{10}$) et moins de 1 % d'acide tétraphosphorique ($H_6P_4O_{13}$). Ce mélange est vendu sous la dénomination commerciale ACIDE 104 par Elf Atochem S.A.

Comme ester neutre halogéné de l'acide phosphorique, on peut citer les phosphates de tris(halogénoalkyle) dans lesquels l'halogène est du chlore ou du brome et le groupe alkyle a de 1 à 4 atomes de carbone, tels que le phosphate de tris(chlorométhyle), le phosphate de tris(chloroéthyle), le phosphate de tris(bromométhyle), le phosphate de tris (bromoéthyle), le phosphate de tris(chloropropyle) et le phosphate de tris(bromopropyle) ; on cite en particulier le phosphate de tris(chloroéthyle).

Comme ester neutre d'acide phosphorique, on peut mentionner les phosphates d'alkyle dans lesquels le groupe alkyle a de 1 à 4 atomes de carbone, comme le phosphate de méthyle et le phosphate d'éthyle.

Le composé (a) peut comprendre de 100 à 80 % en poids d'un monomère ester (méth)acrylique, particulièrement le méthacrylate de méthyle et de 0 à 20 % en poids d'un monomère ayant au moins une insaturation éthylénique, copolymérisable avec le monomère ester (méth)acrylique et l'acide (méth)acrylique. On peut citer, par exemple, les (méth)acrylates d'alkyle ou d'alkyle halogéné dans lesquels le groupe alkyle a de 2 à 12 atomes de carbone, par exemple, le méthacrylate d'éthyle, de butyle, de 2-éthylhexyle, l'acrylate de méthyle, d'éthyle, de butyle, le méthacrylate ou l'acrylate de 2-hydroxy éthyle, le méthacrylate ou l'acrylate de cyclohexyle, le méthacrylate ou l'acrylate de benzyle, le méthacrylate de 2-chloroéthyle, le méthacrylate de 2,3-dibromopropyle, le méthacrylate de chlorométhyle, le styrène, le styrène substitué par un groupe alkyle, comme l'a- méthylstyrène et le styrène substitué par un halogène comme le monochlorostyrène, le méthacrylonitrile, l'acrylonitrile, l'acrylamide, le diacétoneacrylamide, le méthacrylamide, le N-hydroxyméthylméthacrylamide, le N-méthoxyméthyl-méthacrylamide, le N-hydroxyméthylacrylamide, le N-alkyl-maléimide, l'acide maléique et l'acide itaconique.

Le coefficient d'ignifugation C.I., tel que défini ci-dessus, doit être au moins égal à 0,95. S'il est inférieur à 0,95, la composition ne peut pas être classée VO au test UL 94 vertical. Les différents coefficients 0,025 - 0,13 - 0,14 - 0,20 et 1,17 rendent compte de la contribution à l'ignifugation du composant associé.

Le rapport du pourcentage, en poids, du composé (b) à celui du composé (c) est, avantageusement compris entre 0,9 et 3 et, plus particulièrement entre 1 et 1,7.

L'acide (méth)acrylique (b) est utile pour compenser la dégradation des propriétés optiques due à l'additif ignifugeant principal et, en particulier, sert aussi à renforcer les propriétés ignifuges du polymère.

Les composants acide phosphorique et triester de l'acide phosphorique facilitent, en outre, le démoulage des plaques, en réduisant l'adhérence du copolymère méthacrylate de méthyle - acide méthacrylique sur les plaques de verre. On évite ainsi la casse lors du démoulage.

A titre d'exemples de compositions selon l'invention, on peut citer les suivantes (% en poids) :

☐  75 % de méthacrylate de méthyle, 15 % d'acide méthacrylique, 5 % d'acide orthophosphorique anhydre, 5 % de phosphate de tris(chloroéthyle) ; et

☐  70 % de méthacrylate de méthyle, 15 % d'acide méthacrylique, 15 % de phosphate acide d'éthyle sous forme de mélange 50 : 50 en mole de monoester et de diester ;

☐  75 % de méthacrylate de méthyle, 15 % d'acide méthacrylique, 5 % d'un mélange comprenant 49 à 56 % d'acide orthophosphorique, 39 à 42 % d'acide pyrophosphorique, 5 à 8 % d'acide tripolyphosphorique et moins de 1 % d'acide tétrapolyphosphorique, (mélange vendu sous la dénomination commerciale ACIDE 104 par Elf Atochem S.A.) et 5 % de phosphate de tris(chloroéthyle).

La composition selon l'invention peut également comporter, en outre, par rapport à la somme des composants (a) à (c) :

- jusqu'à 2 % en poids d'au moins un agent réticulant dont l'introduction permet de ne pas obtenir au feu un caractère gouttant sur l'échantillon;
- jusqu'à 1 % en poids d'au moins un agent amorceur de polymérisation radicalaire, notamment de type azoïque ou peroxydique tels que l'azobis-(isobutyronitrile), l'azobis(cyclohexane-1-carbonitrile), l'azobis(diméthylvaléro-nitrile) ou le peroxyde de dicumyle, le peroxyde de tertiobutylcumyle, le peroxyde de tertiobutyle ;
- jusqu'à 1% en poids d'au moins un absorbeur de rayonnement ultraviolet tel que les produits TINUVIN 770, TINUVIN P ou TINUVIN 372 commercialisés par CIBA-GEIGY ;
- jusqu'à 1 % en poids d'au moins un agent limitateur de chaîne pouvant notamment être choisi parmi les terpènes monocyliques di-insaturés ou les terpènes bicycliques monoinsaturés.

Comme agent réticulant, on peut utiliser par exemple :

①des composés ayant au moins deux doubles liaisons polymérisables et,
②des composés ayant au moins une double liaison polymérisable et au moins un groupe fonctionnel réactif avec le monomère (méth)acrylique et, le cas échéant, son comonomère.

Comme exemples de composés réticulants ci-dessus, ayant au moins deux doubles liaisons polymérisables, on peut citer :

a) les composés di- ou polyvinyliques, tels que, notamment, le divinylbenzène, le divinyltoluène, le divinylxylène, l'éther divinylique, la divinylcétone et le trivinylbenzène,
b) les di- ou polyesters d'acides mono- ou polycarboxyliques insaturés avec des polyols, tels que les esters des acides di- ou tri(méth)acryliques avec des polyols (tels que l'éthylène glycol, le triméthylolpropane, le glycérol, les polyoxyéthylèneglycols, les polyoxypropylèneglycols, etc...), les polyesters insaturés (que l'on peut obtenir par réaction de l'un quelconque des polyols précités avec un acide insaturé tel que l'acide maléique), etc...
c) les bis (méth)acrylamides tels que le N,N-méthylène-bis-acrylamide,
d) les esters carbamyliques que l'on peut obtenir en faisant réagir des polyisocyanates (tels que le toluène diisocyanate, l'hexaméthylène diisocyanate, le 4,4'-diphénylméthanediisocyanate, etc. et les prépolymères contenant un groupe NCO obtenus en faisant réagir un tel diisocyanate avec des composés contenant des atomes d'hydrogène actifs avec des monomères contenant des groupes hydroxyles. De tels esters sont notamment ceux des acides di(méth)acryliques que l'on peut obtenir en faisant réagir les diisocyanates précités avec le (méth)acrylate d'hydroxyméthyle,
e) les éthers di- ou poly(méth)allyliques de polyols tels que les alkylèneglycols, le glycérol, les polyalkylèneglycols, les polyoxyalkylènepolyols, les hydrates de carbone, etc..., tels que l'éther diallylique du polyéthylène glycol, l'amidon allylé et la cellulose allylée,
f) les esters di- ou polyallyliques d'acides polycarboxyliques tels que le phtalate de diallyle, d'adipate de diallyle, etc.., et
g) les esters d'acides mono- ou polycarboxyliques insaturés avec des éthers mono(méth)allyliques de polyols, tels que l'ester de l'acide (méth)acrylique avec l'éther monoallylique du polyéthylène glycol.

La formulation peut, en outre, contenir :

- un ou plusieurs agent(s) facilitant le démoulage, tels que des acides gras, des sels ou des esters d'acide gras, des esters éthoxylés d'acides (poly)phosphoriques,
- un ou plusieurs pigment(s) permettant d'obtenir des plaques colorées ;
- des charges diverses permettant de rendre les plaques opaques ou opalescentes.

La présente invention porte également sur les plaques coulées obtenues à partir de la composition telle que définie ci-dessus.

La préparation des plaques coulées est réalisée en deux ou trois étapes selon que l'on effectue ou non une prépolymérisation.

**Prépolymérisation**

Toutes les matières premières nécessaires pour former la plaque coulée peuvent être mélangées dès cette première étape. Toutefois, on peut introduire les composés du phosphore ultérieurement, à l'étape de polymérisation.

Pour cette prépolymérisation, le mélange est porté en température dans une gamme allant de 30°C à 140°C, sous pression atmosphérique jusqu'à 100°C (de préférence, 80°C à 95°C) ou sous pression autogène au dessus de 100°C, de manière à atteindre une viscosité comprise entre 30 et 1000 mPas, (de préférence entre 200 et 400 mPas). Le mélange est ensuite refroidi entre 20 et 40°C.

## Polymérisation

On introduit dans le réacteur les composés du phosphore, si ceux-ci n'ont pas été introduits en prépolymérisation, ainsi que les initiateurs de polymérisation et de postpolymérisation. Le mélange ainsi formé est désaéré pendant 1 à 4 heures sous pression réduite entre 0,1 et 0,5 bar absolu puis introduit entre deux plaques de verre. L'ensemble est porté en température dans une gamme allant de 30°C à 100°C, de préférence 55°C à 70°C, pendant 2 à 20 heures.

## Postpolymérisation

La plaque ainsi formée est portée à haute température, entre 90°C et 140°C, de préférence entre 115°C et 130°C pendant 1 à 4 heures.

Le procédé selon la présente invention permet la fabrication de plaques coulées ayant une épaisseur comprise entre 1,5 et 25 mm. Toutefois, la gamme de fabrication des plaques ignifugées est, de préférence, limitée aux épaisseurs allant de 3 à 10 mm.

Les exemples suivants illustrent la présente invention sans toutefois en limiter la portée. Dans les exemples, les parties sont en poids, sauf indications contraires.

## Exemples 1 à 10

Les exemples 1 à 5 sont des exemples selon l'invention. Les exemples 6 à 10 sont des exemples témoins.

Mode opératoire général de fabrication des plaques de polymères (méthlacryliques.

Dans une fiole à vide, d'une capacité de 1 litre, on introduit successivement le monomère (méth)acrylique, par exemple le méthacrylate de méthyle, puis les différents composants indiqués dans le tableau 1, dans les proportions pondérales indiquées dans ce tableau, pour un total de 200 g, ainsi que 0,4 g de diméthacrylate d'éthylène glycol, 400 ppm d'azobisisobutyronitrile, 450 ppm de 1,1'-azo-bis-(2,4-diméthylvaléronitrile), commercialisé par la société WAKO sous la dénomination "V40", 350 ppm de l'absorbeur de rayonnement UV commercialisé par la société CIBA-GEIGY, sous la dénomination "TINUVIN P".

On agite le mélange à la température ambiante pendant 15 minutes et on le dégaze pendant 30 minutes, sous un vide progressif de $1,01 \times 10^5$ Pa à $2,66 \times 10^3$ Pa (760 à 20 torrs).

Dans le même temps, on prépare un moule constitué de deux plaques de verre, retenues parallèles, séparées d'une distance de 4 mm, par un système de jonc en PVC (polychlorure de vinyle) et de pinces. Les deux extrémités du jonc sont maintenues écartées pour permettre l'introduction du mélange réactionnel.

On verse le mélange dans le moule à l'aide d'un entonnoir. Ensuite, les deux extrémités du jonc sont mises en contact, comprimées l'une contre l'autre et maintenues fixes par la mise en place des dernières pinces.

On introduit ensuite le moule et son contenu dans un bain d'eau thermostaté à 60°C. Après un laps de temps suffisant d'environ 12 heures pour que la polymérisation soit parvenue à son terme, c'est-à-dire que l'on ait atteint environ 85 % de conversion, on retire les plaques du bain et on les place dans une étuve à air à 110°C pendant environ 1h30 mn pour qu'elles y subissent une post-polymérisation.

En fin de cycle, on sort les plaques de l'étuve et on les laisse refroidir à l'air libre. Lorsqu'elles sont froides, on retire les pinces et on dégage les plaques de leurs moules.

Les plaques de polymères obtenues sont caractérisées par leur propriété au feu d'après le test UL 94 vertical, leurs propriétés optiques d'après la valeur du trouble après vieillissement. Les protocoles de ces différentes méthodes de caractérisation sont rappelés ci-dessous :

Test UL 94 vertical

Des éprouvettes de polymère, découpées dans les plaques obtenues, sous forme de barrettes de 12,7 mm de largeur et de 100 mm de longueur, placées en position verticale, sont soumises, en ambiance close, à l'action de la flamme d'un brûleur à gaz, par deux applications de 10 secondes, pour juger après chacune de ces applications, si le matériau continue ou non de brûler. La deuxième application n'a lieu que lorsque le feu s'arrête à la première.

Le brûleur, alimenté par du gaz naturel de faible débit, est réglé de manière à obtenir une flamme chauffante et non éclairante d'une hauteur de 20 mm.

L'éprouvette est classée négatif si, après deux applications de 10 secondes, le matériau brûle plus de 30 secondes.

L'éprouvette est classée VO si, après deux applications de 10 secondes, le matériau s'éteint avant 30 secondes.

Trouble (ou "Haze") selon la norme ASTM 1000-361, EN 2155

Partie 9 (1989)

Trouble après vieillissement

1) Des éprouvettes de polymère, découpées dans les plaques obtenues, sous forme de barrettes de 7 cm de longueur x 7 cm de largeur, sont suspendues à l'aide d'une pince, en étuve à 40°C et 57,5 % d'humidité relative. Après un laps de temps de 170 heures, on mesure la valeur du trouble, comme indiqué ci-dessus.
2) Des éprouvettes de polymère, découpées dans les plaques obtenues, sous forme de barrettes de 7 cm de longueur x 7 cm de largeur, sont suspendues à l'aide d'une pince, en étuve à 21°C et 55 % d'humidité relative. Après 2100 heures, on mesure la valeur du trouble comme indiqué ci-dessus. Jusqu'à 4 % de trouble, (test à 2100 heures) les échantillons sont considérés comme bons.

Les quantités des composants et les résultats obtenus sont donnés au tableau 1. Les plaques obtenues aux exemples 2 à 4 se démoulent très facilement. Les plaques obtenues dans les exemples témoin, soit ne répondent pas au test UL94 vertical, déterminant les propriétés au feu, soit présentent un trouble non acceptable.

## TABLEAU I

| Compositions \ Exemples | 1 | 2 | 3 | 4 | 5 | | 6 | 7 | 8 | 9 | 10 |
|---|---|---|---|---|---|---|---|---|---|---|---|
| MAM | 81 | 75 | 70 | 75 | 76 | | 92 | 87 | 85 | 83 | 80 |
| Acide méthacrylique (AMA) | 14 | 15 | 15 | 15 | 20 | | - | - | 10 | 6 | 10 |
| Acide orthophosphorique anhydre | 5 | 5 | | | 4 | | 8 | 6 | 5 | 5 | |
| Acide 104 anhydre | | | | 5 | | | | | | | |
| Phosphate acide d'éthyle (50/50 mono + diester) anhydre | | | 15 | | | | | | | | 10 |
| Phosphate de tris(chloroéthyle) | | 5 | | 5 | | | | 7 | | 6 | |
| % poids AMA / % composé P | 2,8 | 1,5 | 1 | 1,5 | 5,00 | | 0 | 0 | 2 | 0,55 | 1 |
| C.I. | 1,000 | 1,195 | 1,305 | 1,201 | 1,02 | | 1,040 | 1,018 | 0,900 | 1,004 | 0,870 |
| **Propriétés :** Classement UL 94 vertical | VO | VO | VO | VO | VO | | VO | VO | Négatif | VO | Négatif |
| Trouble (%) après 170 h (40°C) HR = 57.5 % | 0,6 | 0,8 | 0,5 | 0,8 | 0,6 | | 1,3 | 0,7 | 1,1 | 0,7 | 0,8 |
| Trouble (%) après 2100 h (21°C) HR = 55 % | 1,2 | 0,8 | 0,6 | 0,8 | 0,9 | | 17 | 5,1 | 2,7 | 10,6 | 0,8 |

EP 0 771 825 A1

**Revendications**

1. Composition pour plaques coulées ignifuges en copolymères (méth)acryliques, ladite composition comprenant (a) au moins un monomère ester (méth)acrylique et, éventuellement, un monomère à insaturation éthylénique copolymérisable avec le monomère ester méthacrylique, (b) de l'acide (méth)acrylique et (c) au moins un composé du phosphore, caractérisée en ce que le composé du phosphore (c) est anhydre et est choisi parmi les acides phosphoriques et les esters acide phosphoriques ou leurs mélanges, associés ou non à au moins un ester neutre phosphorique éventuellement halogéné et en ce qu'elle comprend par rapport au poids total des composants (a), (b) et (c), de 65 à 85 % en poids de composé (a) et des proportions en composés (b) et (c) telles que leur rapport du (b)/(c) soit supérieur à 0,9 et que le coéfficient d'ignifugation C.I., égal à:

0,025 x % acide (méth)acrylique

+ 0,13 x % acide phosphorique

+ 0,14 x % OH-ester

+ 0,20 x % P-ester

$$+1,17 \text{ x \% P-ester halogéné x} \frac{\text{Nbre atome halogène}}{\text{M(P-ester halogéné)}}$$

soit supérieur à 0,95. M (P-ester halogéné)

2. Composition conforme à la revendication 1, caractérisée en ce que le composé du phosphore (c) est choisi parmi les acides orthophosphorique, pyrophosphorique, métaphosphorique, polyphosphorique, les phosphates acide d'alkyle, éventuellement associés à des triesters phosphoriques halogénés ou non.

3. Composition selon la revendication 2, caractérisée par le fait que le composé du phosphore (c) est un mélange 50 : 50 en mole de monoester et de diester éthylique de l'acide phosphorique.

4. Composition selon la revendication 2 caractérisée par le fait que le composé du phosphore est constitué par un mélange anhydre d'acides phosphoriques comprenant, en poids, 49 - 56 % d'acide orthophosphorique, 39 - 42 % d'acide pyrophosphorique, 5 - 8 % d'acide triphosphorique et moins de 1 % d'acide tétraphosphorique.

5. Composition selon la revendication 2, caractérisée par le fait que le triester d'acide phosphorique est un phosphate d'alkyle ou un phosphate de tris(halogénoalkyle), dans lequel l'halogène est du chlore ou du brome et le groupe alkyle a de 1 à 4 atomes de carbone.

6. Composition conforme à l'une quelconque des revendications 1 à 5, caractérisée en ce que le composé (a) est le méthacrylate de méthyle.

7. Composition conforme à l'une quelconque des revendications 1 à 6, caractérisée en ce que le composé (a) comprend de 100 à 80 % en poids d'un monomère (méth)acrylique et de 0 à 20 % d'un monomère à insaturation éthylénique.

8. Composition conforme à l'une quelconque des revendications 1 à 7, caractérisée en ce que le composé (b) est l'acide méthacrylique.

9. Composition conforme à l'une quelconque des revendications 1 à 8, caractérisée en ce que le rapport, en pourcentage pondéral, du composé (b) au composé (c) est compris entre 0,9 et 3.

10. Composition selon la revendication 1, caractérisée par le fait qu'elle comporte (en % en poids), 75 % de méthacrylate de méthyle, 15 % d'acide méthacrylique, 5 % d'acide orthophosphorique et 5 % de phosphate de tris (chloroéthyle).

11. Composition selon la revendication 1, caractérisée par le fait qu'elle comporte (en % en poids), 70 % de méthacrylate de méthyle, 15 % d'acide méthacrylique et 15 % de phosphate acide d'éthyle sous forme de mélange 50 : 50 en mole de monoester et de diester.

12. Composition selon la revendication 4, caractérisée par le fait qu'elle comporte (en % en poids), 75 % de méthacrylate de méthyle, 15 % d'acide méthacrylique, 5 % de mélange d'acides phosphoriques et 5 % de phosphate de tris(chloroéthyle).

13. Composition selon l'une quelconque des revendications 1 à 12 caractérisée par le fait qu'elle comporte, en outre, jusqu'à 2 % en poids par rapport à la somme des composants (a) à (c) d'au moins un agent réticulant.

14. Composition selon l'une quelconque des revendications 1 à 13 caractérisée par le fait qu'elle comporte, en outre, jusqu'à 1 % par rapport à la somme des composants (a) à (c) d'au moins un agent absorbeur du rayonnement ultraviolet.

15. Composition selon l'une quelconque des revendications 1 à 14, caractérisée par le fait qu'elle comporte, en outre, jusqu'à 1 % en poids par rapport à la somme des composants (a) à (c) d'agent limitateur de chaîne.

16. Composition conforme à l'une quelconque des revendications 1 à 15, caractérisée en ce qu'elle comprend, en outre, au moins un agent amorceur de polymérisation radicalaire.

17. Procédé de préparation de plaques coulées ignifuges consistant à introduire la composition à polymériser entre deux plaques d'un moule résistant à la température maximale de polymérisation de la composition, à chauffer pour obtenir la polymérisation en masse puis à refroidir et à démouler, caractérisé en ce qu'on utilise une composition conforme à l'une quelconque des revendications 1 à 16, que l'on chauffe à une température comprise entre 30°C et 100°C pendant 2 à 20 heures, puis entre 90°C et 140°C pendant 1 à 4 heures.

18. Plaques coulées ignifuges formées à partir de composition conforme à l'une des revendications 1 à 16.

**Office européen des brevets**

## RAPPORT DE RECHERCHE EUROPEENNE

Numero de la demande

EP 96 40 1968

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| D,A | US-A-3 030 327 (L.J.HOSCH)<br>--- | | C08F220/14 |
| A | GB-A-1 443 982 (MITSUBISHI RAYON CO. LTD.)<br>----- | | |

**DOMAINES TECHNIQUES RECHERCHES (Int.Cl.6)**

C08F

Le présent rapport a été établi pour toutes les revendications

| Lieu de la recherche | Date d'achèvement de la recherche | Examinateur |
|---|---|---|
| LA HAYE | 10 Février 1997 | Cauwenberg, C |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..........................................................................
& : membre de la même famille, document correspondant

EPO FORM 1503 03.82 (P04C02)